# EUROPÄISCHE PATENTSCHRIFT

(11) **EP 2 960 068 B1**
(45) Veröffentlichungstag und Bekanntmachung des Hinweises auf die Patenterteilung: **19.07.2017**
(21) Anmeldenummer: 15001150.0
(22) Anmeldetag: 20.04.2015
(51) Int. Cl.: B42D 25/324, B42D 25/36, B42D 25/373, B42D 25/425, B42D 25/44, B42D 25/445

(54) **SICHERHEITSELEMENT MIT MODIFIZIERTEM FARBKIPPEFFEKT**
SECURITY ELEMENT WITH MODIFIED COLOUR SHIFT EFFECT
ÉLÉMENT DE SÉCURITÉ À EFFET DE BASCULE COLORÉE MODIFIÉ

(30) Priorität: 23.06.2014 AT 4882014
(43) Veröffentlichungstag der Anmeldung: 30.12.2015
(73) Patentinhaber: Hueck Folien Ges.m.b.H, 4342 Baumgartenberg (AT)
(72) Erfinder: Keplinger, Jürgen, 4351 Saxen (AT)
(74) Vertreter: Landgraf, Elvira

(56) Entgegenhaltungen:
- EP-A2- 2 196 321
- DE-A1-102005 021 514

## Beschreibung

Die Erfindung betrifft ein Sicherheitselement, insbesondere für Wertdokumente, Banknoten und dergleichen, das einen modifizierten Farbkippeffekt aufweist.

Aus WO 02/18155 ist ein Verfahren zur fälschungssicheren Markierung von Gegenständen bekannt, wobei der Gegenstand mit einer Markierung bestehend aus einer elektromagnetische Wellen reflektierenden ersten Schicht auf die eine für elektromagnetische Wellen durchlässige Schicht mit einer definierten Dicke aufgebracht wird, worauf auf diese Schicht eine aus metallischen Clustern gebildete dritte Schicht folgt, versehen wird.

Aus EP 1 716 007 B1 sind Sicherheitselemente mit optisch variablen Schichten, die unter bestimmten Betrachtungswinkeln unterschiedliche Farbeindrücke vermitteln und die zusätzlich zu diesem Farbkippeffekt im Farbkippeffektsetup zusätzliche Sicherheitsstufen aufweisen, bekannt.

Aus WO 2006/040069 A ist ein Sicherheitselement zur Absicherung von Wertgegenständen mit einer optisch variablen Schicht bekannt, das ebenfalls unter unterschiedlichen Betrachtungswinkeln unterschiedliche Farbeindrücke vermittelt. Zusätzlich ist in einem beschränkten Überdeckungsbereich über der optisch variablen Schicht eine semitransparente Farbschicht angeordnet, deren Farbeindruck dem Farbeindruck der optisch variablen Schicht unter vorbestimmten Betrachtungsbedingungen angepasst ist.

Aus EP 2 420 391 A ist ein Sicherheitselement mit einer optisch variablen Schicht, die unter unterschiedlichen Betrachtungswinkeln unterschiedliche Farbeindrücke aufweist, bekannt, wobei in einem definierten Bereich über oder neben der optisch variablen Schicht eine farbige metallische Schicht angeordnet ist, wobei der Farbeindruck dieser Schicht an den Farbeindruck der optisch variablen Schicht unter einem definierten Betrachtungswinkel angepasst ist. Aus DE 102005021514 A ist ein Sicherheitselement mit einer münzmetallfarbenen Beschichtung bekannt, wobei als Trägersubstrat gebürstete Kunststofffolien oder gebürstete oder geprägte Metallfolien nicht verwendet werden. Aus EP 2196 321 A2 ist ein transparentes Sicherheitsmerkmal mit Farbkippeffekt bekannt.

Aufgabe der vorliegenden Erfindung war es, ein neues fälschungssicheres Sicherheitselement für Wertdokumente, Banknoten und dergleichen bereitzustellen, das eine erhöhte Fälschungssicherheit und einen modifizierten Farbkippeffekt aufweist.

Gegenstand der Erfindung ist daher ein Sicherheitselement gemäß Anspruch 1. Durch die Oberflächenmodifizierung ist die polymere transparente Abstandsschicht, die für die Erzeugung des blickwinkelabhängigen Farbkippeffekts verantwortlich ist, durch die Vertiefungen nicht mit gleichmäßiger Dicke über die gesamte Fläche applizierbar.

Dadurch wird die Dicke der Abstandsschicht bereichsweise modifiziert. Je nach Ausmaß der Modifizierung tritt in diesen Bereichen dann entweder ein unterschiedlicher Farbkippeffekt auf oder bei entsprechend hoher Reduzierung bzw. starker Erhöhung der Dicke der Abstandsschicht tritt kein visuell erkennbarer Farbkippeffekt mehr auf, d.h. der vom auf der Trägerfolie aufgebrachten Aufbau erzeugte Farbkippeffekt wird durch die Modifizierung der Dicke der Abstandsschicht durch die Vertiefungen unterdrückt oder ausgelöscht. Dadurch entstehen über die gesamte Fläche unterschiedliche Farbkippeffekte bzw. wird der Farbkippeffekt teilweise ausgelöscht.

Als Trägersubstrate kommen beispielsweise Trägerfolien vorzugsweise flexible Kunststofffolien, beispielsweise aus PI, PP, MOPP, PE, PPS, PEEK, PEK, PEI, PSU, PAEK, LCP, PEN, PBT, PET, PA, PC, COC, POM, ABS, PVC, PTFE, ETFE (Ethylentetrafluorethylen), PFA (Tetrafluorethylen-Perfluorpropylvinylether-Fluorcopolymer), MFA (Tetrafluor-methylen-Perfluorpropylvinylether-Fluorcopolymer), PTFE (Polytetra-fluorethylen), PVF (Polyvinylfluorid), PVDF (Polyvinylidenfluorid), und EFEP (EthylenTetrafluorethylen-Hexafluorpropylen-Fluorterpolymer) in Frage. Die Trägerfolien weisen vorzugsweise eine Dicke von 5 - 700 µm, bevorzugt 5 - 200 µm, besonders bevorzugt 5 - 50 µm auf.

Besonders bevorzugt werden PET-Folien eingesetzt.

Diese Kunststofffolien werden zur Erzeugung von Vertiefungen oberflächenmodifiziert. Dies erfolgt erfindungsgemäß mechanisch, durch Bürsten. Die Bürstung kann dabei in Quer- oder in Längsrichtung, und/oder in Form von Motiven bzw. Kreisbürstung vorliegen, die Bürsttiefe beträgt dabei vorteilhafterweise 1 bis 10 µm, vorzugsweise 1 bis 5 µm.

Die Abstände der durch die Bürstung entstehenden Vertiefungen betragen vorteilhafterweise 1 bis 50 µm.

Ferner dienen erfindungsgemäß als Trägersubstrat auch gebürstete oder geprägte Metallfolien, beispielsweise Al-, Cu-, Sn-, Ni-, Fe- oder Edelstahlfolien mit einer Dicke von 5 - 200 µm, vorzugsweise 10 bis 80 µm, besonders bevorzugt 20 - 50 µm. Auf das Trägersubstrat wird anschließend eine vollflächige oder partielle Schicht, gebildet aus metallischen Clustern, aufgebracht. Die metallischen Cluster können beispielsweise aus Aluminium, Gold, Palladium, Platin, Chrom, Silber, Kupfer, Nickel, Tantal, Zinn und dergleichen oder deren Legierungen, wie beispielsweise Au/Pd, Cu/Ni oder Cr/Ni bestehen.

Vorzugsweise können auch Clustermaterialien aufgebracht werden, beispielsweise halbleitende Elemente der III. bis VI. Haupt- bzw. der II. Nebengruppe, deren Plasmonenanregung extern (z.B. über Röntgen- oder Ionenstrahlung oder elektromagnetische Wechselwirkungen) triggerbar ist. Dadurch wird bei Betrachtung mit einem geeigneten Lesegerät eine Änderung im Farbspektrum (z.B. Intensitätsänderung) bzw. ein Blinken des Farbkippeffekts sichtbar.

Die Clusterschicht kann auch zusätzliche Eigenschaften, beispielsweise elektrisch leitfähige, magnetische oder fluoreszierende Eigenschaften aufweisen. So weist beispielsweise eine Clusterschicht aus Ni, Cr/Ni, Fe bzw. Core-Shell-Strukturen mit diesen Materialien bzw. Mischungen dieser Materialien mit den oben erwähnten Clustermaterialien derartige zusätzliche Merkmale auf. Unter anderem durch Core-Shell-Strukturen lassen sich auch fluoreszierende Cluster herstellen, z.B. unter Verwendung von Quantum Dots^{®} der Firma Quantum Dot Corp.

Die auf die Schicht gebildet aus metallischen Clustern folgende polymere Abstandschicht besteht beispielsweise aus physikalisch oder strahlungshärtenden, insbesondere UV-härtenden, Farb- oder Lacksystemen auf Basis von Nitrocellulose, Epoxy-, Polyester-, Kolophonium-, Acrylat-, Alkyd-, Melamin-, PVA-, PVC-, Isocyanat-, Urethan- oder PS-Copolymersystemen . Durch die durch Oberflächenmodifizierung erzeugten Vertiefungen ist die polymere transparente Abstandsschicht nicht in gleichmäßiger Dicke ausgeführt. Die Dicke der Schicht ist in jedem Fall abhängig von der Tiefe der Vertiefungen und kann dabei in einem weiten Bereich variieren. Vorzugsweise weist die Abstandsschicht eine nominelle Dicke in einem Bereich von 10 nm bis 3 µm auf. Unter nomineller Dicke wird jene Schichtdicke verstanden, die bei einem vorgegebenen Materialeinsatz auf einer glatten Oberfläche erzielt wird.

Im Wesentlichen kann die Dicke der Abstandsschicht über den gesamten Bereich bereichsweise auch kleiner als 10 nm bis größer als 3 µm sein.

Auf die polymere Abstandsschicht wird eine elektromagnetische Wellen reflektierende Schicht aufgebracht. Diese Schicht kann vorzugsweise aus Metallen, wie beispielsweise Aluminium, Gold, Chrom, Silber, Kupfer, Zinn, Platin, Nickel oder Tantal, aus Halbleitern, wie beispielsweise Silizium, und deren Legierungen, beispielsweise Nickel/Chrom, Kupfer/Aluminium und dergleichen oder einer Druckfarbe mit Metallpigmenten bestehen. Alternativ können auch Schichten mit hohem Brechungsindex, sog. HRI Schichten aufgebracht sein.

Die elektromagnetische Wellen reflektierende Schicht wird vollflächig oder partiell durch bekannte Verfahren, wie Sprühen, Bedampfen, Sputtern, oder beispielsweise als Druckfarbe durch bekannte Druckverfahren (Tief-, Flexo-, Sieb-, Digitaldruck), durch Lackieren, Walzenauftragsverfahren, Schlitzdüsen-(Slot-Die), Tauch- (roll dip coating) oder Vorhangauftragsverfahren (curtain coating) und dergleichen aufgebracht. Zur partiellen Aufbringung eignen sich insbesondere bekannte Demetallisierungsverfahren.

Die Dicke der elektromagnetische Wellen reflektierenden Schicht beträgt vorzugsweise etwa 10 - 50 nm, wobei aber auch höhere bzw. geringere Schichtdicken möglich sind.

In einer weiteren Ausführungsform kann auf das Trägersubstrat auch zuerst die elektromagnetische Wellen reflektierenden Schicht anschließend die polymere Abstandsschicht und auf diese Abstandsschicht die Schicht gebildet aus metallischen Clustern aufgebracht sein (direkter Setup).

Ferner kann der auf dem erfindungsgemäßen Sicherheitselement vorhandene Dünnschichtaufbau mit weiteren funktionellen Schichten kombiniert sein, die beispielsweise magnetische, elektrisch leitfähige, physikalische, optische oder optisch aktive Eigenschaften aufweisen.

Als Schichten mit magnetischen Eigenschaften können Schichten, die paramagnetische, diamagnetische und auch ferromagnetische Stoffe, wie Eisen, Nickel und Cobalt oder deren Legierungen, deren Verbindungen oder Salze (beispielsweise Oxide oder Sulfide) Barium oder Cobalt-ferrite, hart- und weich magnetische Eisen- und Stahlsorten enthalten, verwendet werden.

Die optischen Eigenschaften der Schicht lassen sich durch sichtbare Farbstoffe bzw. Pigmente, lumineszierende Farbstoffe bzw. Pigmente, die im sichtbaren, im UV-Bereich oder im IR-Bereich fluoreszieren bzw. phosphoreszieren, Effektpigmente, wie Flüssigkristalle, Perlglanz, Bronzen und/oder Multilayer-Farbumschlagpigmente und wärmeempfindliche Farben bzw. Pigmente beeinflussen. Diese sind einzeln bzw. in allen möglichen Kombinationen einsetzbar.

Als elektrisch leitfähige Schichten, können Schichten, die Graphit, Ruß, leitfähige organische oder anorganische Polymere. Metallpigmente (beispielsweise Kupfer, Aluminium, Silber, Gold, Eisen, Chrom und dergleichen), Metalllegierungen wie Kupfer-Zink oder Kupfer- Aluminium oder auch amorphe oder kristalline keramische Pigmente wie ITO und ATO, dotierte oder nicht dotierte Halbleiter wie beispielsweise Silicium, Germanium oder Ionenleiter wie amorphe oder kristalline Metalloxide oder Metallsulfide enthalten, eingesetzt werden.

Optisch aktive Strukturen sind beispielsweise diffraktive Strukturen, Beugungsstrukturen, Oberflächenreliefs, Hologramme, Kinegramme und dergleichen.

Zum Schutz des Schichtaufbaus kann das Sicherheitselement ein- oder beidseitig mit einer Schutzlackschicht versehen oder ein- oder beidseitig kaschiert sein.

Gegebenenfalls kann das Sicherheitselement weiters ein- oder beidseitig mit einer Klebebeschichtung, beispielsweise einer Selbstklebe- Heiß- oder Kaltsiegebeschichtung versehen sein.

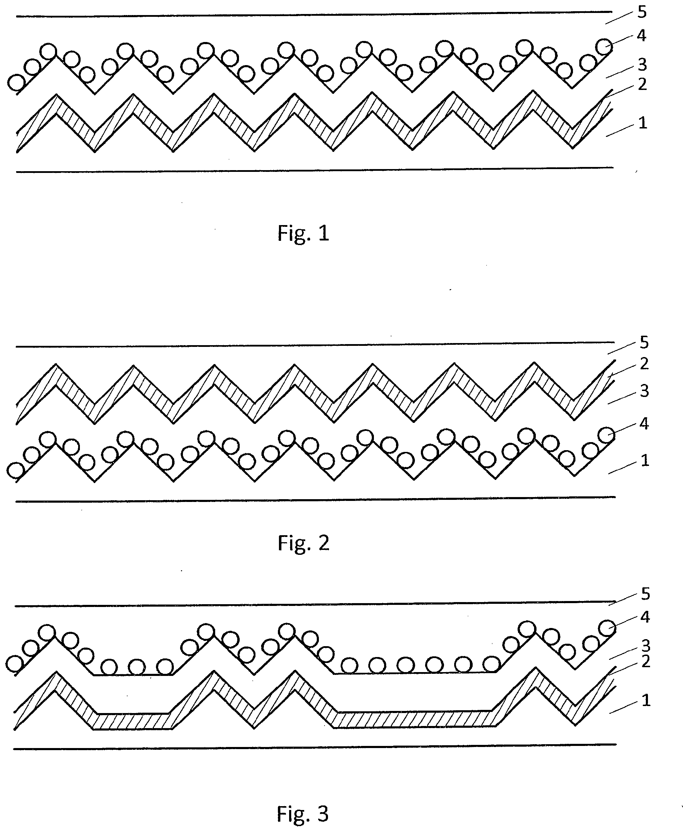

In den Figuren 1 bis 3 sind Ausführungen der Erfindung dargestellt.
In den Figuren bedeuten
1 das Trägersubstrat mit Vertiefungen
2 eine elektromagnetische Wellen reflektierende Schicht
3 eine Abstandsschicht
4 eine Schicht gebildet von metallischen Clustern
5 eine Schutzlackschicht.

Figur 1 zeigt dabei einen sogenannten direkten Aufbau des erfindungsgemäßen Sicherheitselements.
Dabei ist auf dem oberflächenmodifizierten Trägersubstrat 1 erst die elektromagnetische Wellen reflektierende Schicht 2, auf dieser elektromagnetische Wellen reflektierenden Schicht 2, die Abstandsschicht 3 und auf der Abstandsschicht 3 die Schicht gebildet aus metallischen Clustern 4 aufgebracht. Der Aufbau ist mit einer Schutzlackschicht 5 versehen.

In Figur 2 ist ein sogenannter indirekter Aufbau des erfindungsgemäßen Sicherheitselements dargestellt.
Dabei ist auf dem oberflächenmodifizierten Trägersubstrat 1 erst die Schicht gebildet aus metallischen Clustern 4 auf dieser Schicht aus metallischen Clustern 4 die Abstandsschicht 3 und auf der Abstandsschicht 3 die elektromagnetische Wellen reflektierende Schicht 2 aufgebracht. Der Aufbau ist mit einer Schutzlackschicht 5 versehen.

Dabei ist der Farbkippeffekt durch das transparente Trägersubstrat erkennbar.

In Figur 3 ist ein direkter Aufbau des erfindungsgemäßen Sicherheitselements dargestellt, wobei das Trägersubstrat 1 nur bereichsweise, also partiell oberflächenmodifiziert ist.

Das erfindungsgemäße Sicherheitselement ist zur Sicherung von Wertdokumenten, wie Ausweisen, Karten, Banknoten oder Etiketten, Siegeln und dergleichen geeignet, aber auch als Verpackungsmaterial beispielsweise in der pharmazeutischen, der Elektronik- und/oder Lebensmittelindustrie, beispielsweise in Form von Blisterfolien, Faltschachteln, Abdeckungen, Folienverpackungen und dergleichen geeignet.

Für die Anwendung als Sicherheitsmerkmale werden die Substrate bzw. Folienmaterialien bevorzugt in Streifen, Fäden oder Patches geschnitten, wobei die Breite der Streifen oder Fäden vorzugsweise 0,5 - 20 mm betragen kann und die Patches vorzugsweise mittlere Breiten bzw. Längen von 0,3 - 20 mm aufweisen.
Dabei kann das Sicherheitselement zumindest teilweise in das Wertdokument eingebettet werden oder auf dieses appliziert werden. Um das Sicherheitselement im oder am Wertdokument zu verankern, wird dieses üblicherweise ein- oder beidseitig mit einer Klebebeschichtung versehen. Diese Klebebeschichtung kann entweder in Form einer Heißsiegel-, Kaltsiegel- oder Selbstklebebeschichtung ausgeführt sein.

Für die Anwendung in oder auf Verpackungen wird das Folienmaterial bevorzugt in Streifen, Bänder, Fäden oder Patches geschnitten, wobei die Breite der der Fäden, Streifen bzw. Bänder vorzugsweise 0,5 - 50 mm beträgt und die Patches vorzugsweise mittlere Breiten und Längen von 2 - 30 mm aufweisen.

## Patentansprüche

1. Sicherheitselement aufweisend ein Trägersubstrat, jeweils mindestens eine elektromagnetische Wellen reflektierende Schicht, eine polymere transparente Abstandsschicht und eine Schicht gebildet von metallischen Clustern, **dadurch gekennzeichnet, dass** als Trägersubstrat gebürstete Kunststofffolien oder gebürstete oder geprägte Metallfolien eingesetzt werden, wobei zumindest eine Oberfläche des Trägersubstrats durch mechanische Oberflächenmodifizierung Vertiefungen aufweist, wobei die mittlere Tiefe der Vertiefungen im Bereich von 1 bis 10 µm liegt und auf diese Oberfläche des Trägersubstrats ein Dünnschichtaufbau enthaltend die Schicht aus metallischen Clustern, die polymere Abstandsschicht und die elektromagnetische Wellen reflektierende Schicht, aufgebracht ist.

2. Sicherheitselement nach Anspruch 1, **dadurch gekennzeichnet, dass** die Bürstung in Längs- oder Querrichtung und/oder in Form von Motiven bzw. als Kreisbürstung vorliegt.

3. Sicherheitselement nach einem der Ansprüche 1 bis 2, **dadurch gekennzeichnet, dass** auf das Trägersubstrat ein Dünnschichtelement mit folgender Schichtabfolge aufgebracht ist: a) eine Schicht aus metallischen Clustern, b) auf diese Schicht aus metallischen Clustern eine polymere transparente Abstandsschicht und c) auf diese polymere transparente Abstandsschicht eine elektromagnetische Wellen reflektierende Schicht.

4. Sicherheitselement nach einem der Ansprüche 1 bis 3, **dadurch gekennzeichnet, dass** auf das Trägersubstrat ein Dünnschichtelement mit folgender Schichtabfolge aufgebracht ist: a) eine elektromagnetische Wellen reflektierende Schicht, b) auf diese elektromagnetische Wellen reflektierende Schicht eine polymere transparente Abstandsschicht und c) auf diese polymere transparente Abstandsschicht eine Schicht aus metallischen Clustern.

5. Sicherheitselement nach einem der Ansprüche 1 bis 4, **dadurch gekennzeichnet, dass** die metallische Clusterschicht aus Aluminium, Gold, Palladium, Platin, Chrom, Silber, Kupfer, Nickel, Tantal, Zinn oder deren Legierungen, wie Au/Pd, Cu/Ni oder Cr/Ni, besteht.

6. Sicherheitselement nach einem der Ansprüche 1 bis 5, **dadurch gekennzeichnet, dass** die polymere Abstandsschicht aus strahlungshärtenden, wie UV-härtenden oder physikalisch trocknenden, Farb- oder Lacksystemen auf Basis von Nitrocellulose, Epoxy-, Polyester-, Kolophonium-, Acrylat-, Alkyd-, Melamin-, PVA-, PVC-, Isocyanat-, Urethan- oder PS-Copolymersystemen besteht.

7. Sicherheitselement nach einem der Ansprüche 1 bis 6, **dadurch gekennzeichnet, dass** die nominelle Dicke der Abstandsschicht 10 nm bis 3 µm beträgt.

8. Sicherheitselement nach einem der Ansprüche 1 bis 7, **dadurch gekennzeichnet** das die elektromagnetische Wellen reflektierenden Schicht eine reflektierende metallische Schicht oder eine HRI Schicht ist.

9. Sicherheitselement nach einem der Ansprüche 1 bis 8, **dadurch gekennzeichnet, dass** es weitere funktionelle Schichten mit elektrisch leitfähigen, magnetischen, optischen oder optisch aktiven Eigenschaften aufweist.

10. Sicherheitselement nach einem der Ansprüche 1 bis 9, **dadurch gekennzeichnet, dass** es ein- oder beidseitig mit einer Schutzlackschicht versehen oder kaschiert ist.

11. Sicherheitselement nach einem der Ansprüche 1 bis 10, **dadurch gekennzeichnet, dass** es ein- oder beidseitig mit einer Klebebeschichtung versehen ist.

12. Verwendung des Sicherheitselements nach einem der Ansprüche 1 bis 11 zur Sicherung von Wertdokumenten, wie Ausweisen, Karten, Banknoten oder Etiketten, Siegeln oder als oder auf Verpackungen.

## Claims

1. A security element, comprising a carrier substrate, at least one layer reflecting electromagnetic waves, at least one polymeric transparent spacer layer and at least one layer formed of metallic clusters, **characterized in that** brushed polymer films or brushed or embossed metal foils are used as the carrier substrate, at least one surface of the carrier substrate comprising depressions as a result of mechanical surface modification, the average depth of the depressions being in the range of 1 to 10 µm, and a thin layer structure comprising the layer made of metallic clusters, the polymeric spacer layer and the layer reflecting electromagnetic waves being applied to this surface of the carrier substrate.

2. The security element according to claim 1, **characterized in that** the brushing is present in the longitudinal and/or transverse directions and/or in the form of patterns or as a circular brushing.

3. The security element according to any one of claims 1 to 2, **characterized in that** a thin film element having the following layer sequence is applied to the carrier substrate: a) a layer made of metallic clusters, b) a polymeric transparent spacer layer on this layer made of metallic clusters, and c) a layer reflecting electromagnetic waves on this polymeric transparent spacer layer.

4. The security element according to any one of claims 1 to 3, **characterized in that** a thin film element having the following layer sequence is applied to the carrier substrate: a) a layer reflecting electromagnetic waves, b) a polymeric transparent spacer layer on this layer reflecting electromagnetic waves, and c) a layer made of metallic clusters on this polymeric transparent spacer layer.

5. The security element according to any one of claims 1 to 4, **characterized in that** the metallic cluster layer is made of aluminum, gold, palladium, platinum, chromium, silver, copper, nickel, tantalum, tin or the alloys thereof, such as Au/Pd, Cu/Ni or Cr/Ni.

6. The security element according to any one of claims 1 to 5, **characterized in that** the polymeric spacer layer is composed of radiation-curing, such as UV-curing or physically drying, paint or varnish systems based on nitrocellulose, epoxy, polyester, colophony, acrylate, alkyd, melamine, PVA, PVC, isocyanate, urethane or PS copolymer systems.

7. The security element according to any one of claims 1 to 6, **characterized in that** the nominal thickness of the spacer layer is 10 nm to 3 µm.

8. The security element according to any one of claims 1 to 7, **characterized in that** the layer reflecting electromagnetic waves is a reflective metallic layer or an HRI layer.

9. The security element according to any one of claims 1 to 8, **characterized by** comprising further functional layers having electrically conductive, magnetic, optical or optically active properties.

10. The security element according to any one of claims 1 to 9, **characterized by** being provided or laminated on one side or both sides with a protective paint layer.

11. The security element according to any one of claims 1 to 10, **characterized by** being provided with an adhesive coating on one side or both sides.

12. Use of the security element according to any one of claims 1 to 11 for protecting value documents, such as identification cards, cards, bank notes or labels, seals, or as or on packagings.

## Revendications

1. Élément de sécurité présentant une substrat de support, respectivement au moins une couche réfléchissant les ondes électromagnétiques, une couche d'espacement polymère transparente et une couche formée de grappes métalliques, **caractérisé en ce que** l'on utilise comme substrat de support des films de matière plastique ou des films métalliques brossés ou gaufrés, dans lequel au moins une surface du substrat de support présente des creux par modification de surface mécanique, dans lequel la profondeur moyenne des creux se situe dans la plage de 1 à 10 µm et l'on applique sur cette surface du substrat de support une structure en couche mince contenant la couche de grappes métalliques, la couche d'espacement polymère et la couche réfléchissant les ondes électromagnétiques.

2. Élément de sécurité selon la revendication 1, **caractérisé en ce que** le brossage est présent dans la direction longitudinale ou la direction transversale et/ou sous la forme de motifs ou d'un brossage circulaire.

3. Élément de sécurité selon l'une quelconque des revendications 1 à 2, **caractérisé en ce que** l'on applique sur le substrat de support un élément en couche mince avec la série suivante de couches : a) une couche de grappes métalliques, b) sur cette couche de grappes métalliques une couche d'espacement polymère transparente et c) sur cette couche d'espacement polymère transparente une couche réfléchissant les ondes électromagnétiques.

4. Élément de sécurité selon l'une quelconque des revendications 1 à 3, **caractérisé en ce que** l'on applique sur le substrat de support un élément en couche mince avec la série suivante de couches : a) une couche réfléchissant les ondes électromagnétiques, b) sur cette couche réfléchissant les ondes électromagnétiques une couche d'espacement polymère transparente et c) sur cette couche d'espacement polymère transparente, une couche de grappes métalliques.

5. Élément de sécurité selon l'une quelconque des revendications 1 à 4, **caractérisé en ce que** la couche de grappes métalliques est constituée d'aluminium, d'or, de palladium, de platine, de chrome d'argent, de cuivre, de nickel, de tantale, d'étain ou de leurs alliages tels que Au/Pd, Cu/Ni ou Cr/Ni.

6. Élément de sécurité selon l'une quelconque des revendications 1 à 5, **caractérisé en ce que** la couche d'espacement polymère est constituée de systèmes de colorant ou de vernis durcissant sous l'effet de rayonnements, notamment durcissant sous l'effet des UV ou séchant physiquement, à base de nitrocellulose, de systèmes copolymères d'époxy, de polyester, de colophane, d'acrylate, d'alkyde, de mélamine, de PVA, de PVC, d'isocyanate, d'uréthane ou de PS.

7. Élément de sécurité selon l'une quelconque des revendications 1 à 6, **caractérisé en ce que** l'épaisseur nominale de la couche d'espacement atteint 10 nm à 3 µm.

8. Élément de sécurité selon l'une quelconque des revendications 1 à 7, **caractérisé en ce que** la couche réfléchissant les ondes électromagnétiques est une couche métallique réfléchissante ou une couche de HRI.

9. Élément de sécurité selon l'une quelconque des revendications 1 à 8, **caractérisé en ce qu'**il présente d'autres couches fonctionnelles ayant des propriétés conductrices de l'électricité, magnétiques, optiques et optiquement actives.

10. Élément de sécurité selon l'une quelconque des revendications 1 à 9, **caractérisé en ce qu'**il est pourvu ou contrecollé sur une ou deux faces avec une couche de vernis de protection.

11. Élément de sécurité selon l'une quelconque des revendications 1 à 10, **caractérisé en ce qu'**il est pourvu sur une ou deux faces d'un revêtement d'adhésif.

12. Utilisation de l'élément de sécurité selon l'une quelconque des revendications 1 à 11 pour la sécurisation de documents de valeur tels que des passeports, des cartes, des billets de banque ou des étiquettes, des scellages ou comme ou sur des emballages.
